# EUROPEAN PATENT APPLICATION

(11) **EP 3 699 837 A1**
(43) Date of publication of application: **26.08.2020**
(21) Application number: 19157937.4
(22) Date of filing: 19.02.2019
(51) Int. Cl.: G06Q 10/06

(54) **COST AND VALUE ENGINEERING FOR A SOFTWARE-BASED SOFTWARE MODEL**

(71) Applicant: Siemens Aktiengesellschaft, 80333 München (DE)
(72) Inventor: Körner, Christian, 83346 Bergen (DE)

(57) **Abstract**

A system that supports cost and value engineering, CVE, for software-based business models (BM) or systems is provided. The proposed system enhances an advanced and formal requirements engineering technique of hierarchical task analysis to capture basic CVE data, for example like quality cost and value. The system supports decomposition of quality requirements (QR) together with functional decompositions of the respective tasks. It enables the definition of CVE functions for each refinement. These are the basic data needed for CVE, which tries to minimize the cost and maximize the value retaining a given functionality and quality. Result is a decomposition of tasks into activities of a defined functionality and quality. Cost and value functions are decomposed into the activity as well. These activities allow the system to produce an upper limit of realization cost estimation and a re-evaluation of the business model (BM).

## Description

The present invention is directed to a computer implemented method for cost and value engineering for a software-based business model, to a corresponding computer program and a corresponding computer-readable storage medium. The invention is further directed to a computer system with a processor and a computer-readable storage medium.

Value engineering or cost and value engineering of conventional products allows to structure, evaluate and control business module portfolios. In particular, it may provide a structured approach to development and planning of projects, products, tasks and services. It may be one goal to optimize a cost and value versus resources spent for the product.

In particular, value engineering was traditionally applied to minimize costs of mass production of products or repeatedly applied services. These costs, however, may be negligible for software-based products, so value engineering for software-based products was greatly ignored so far. As software-based business models become more and more dominant in the digitalization age, its development and maintenance costs may become one leading cost component for software-based products.

It is therefore an object of the present invention to provide an improved concept for cost and value engineering that allows a more efficient cost and value engineering of software-based business models.

This objective is achieved by a computer implemented method, a computer program, a computer-readable storage medium and a computer system according to the independent claims. Further implementations and embodiments are subject matter of the dependent claims.

According to an independent aspect of the improved concept, a computer implemented method for cost and value engineering for a software-based business model is provided. The method comprises importing a representation of the business model comprising a set of predefined business model parameters defining the business model by an import module. One or more quality requirements for the business model are imported by the import module. One or more tasks based on the imported business model parameters are defined by a controller module and a hierarchical task analysis on each of the tasks is performed depending on the one or more quality requirements by the controller module. A cost and value function is defined for each of the tasks depending on a result of the respective hierarchical task analysis by the controller module. Cost and value activities of all of the tasks are stored to a computer-readable storage medium by a data storage module.

Results may comprise a decomposition of tasks into activities of a defined functionality and quality. Cost and value functions may be decomposed into the activity as well. These activities may have a maximum size (for example fitting into one sprint), which may allow the controller module to produce an upper limit of realization cost estimation and therefore a re-evaluation of the business model with for example a correction of the value proposition or a rightsizing of task and quality offerings.

The cost and value functions of all of the activities may be stored to a computer-readable storage medium by a data storage module.

Here and in the following, the terms "cost and value engineering" and "value engineering" are used interchangeably.

Here and in the following, the import module, the controller module, the data storage module as well as other modules referred to, may for example be software modules of a computer program for carrying out the computer-implemented method. Alternatively, the modules may correspond to respective hardware modules with software for carrying out the respective steps stored on them.

In the context of this disclosure, a business model may be based on a business idea, which contains as a minimum information a problem to be solved or a benefit to be created for example for a defined set of stakeholders. To create one or more business models out of a business idea, it may be defined more precisely in several aspects. This information can be captured and evaluated as steps to be taken, rules to be followed and resources provided or used. In the context of this disclosure, this information may be denoted as business model parameters.

In the context of the present invention, values may comprise customer values and/or company values.

In the context of the present invention, costs may comprise real development and/or operational costs that are for example determined in a design or architecture phase of development of the business model. Cost drivers are for example quantified by their respective volume or frequency.

By means of a computer implemented method according to the improved concept, in particular due to the combination of hierarchical task analysis with the quality requirements been taken into account, the requirements engineering technique of hierarchical task analysis is enhanced to capture basic cost and value engineering data, like quality costs and quality value, for software-based business models. Therefore, costs may be minimized and value may be maximized retaining a defined functionality and quality.

According to several implementations of the method, the method further comprises decomposing the one or more quality requirements to obtain respective quality activities by the controller module. The hierarchical task analysis is then performed depending on the quality activities, that is, at activity level.

According to several implementations, the hierarchical task analysis further comprises, for each of the tasks, a functional decomposition of the respective task.

According to several implementations, the method further comprises decomposing the cost and value function for each of the tasks to obtain respective cost and value activities by the controller module and storing the cost and value activities of all of the tasks to the computer-readable storage medium by the data storage module.

According to several implementations, the method further comprises estimating costs for the software-based business model based on the cost and value functions by the controller module.

According to several implementations, the method further comprises validating the software-based business model based on the cost and value functions by the controller module.

According to several implementations, the method further comprises importing at least one definition from a knowledge database by the import module and using the at least one definition by the controller module for performing the hierarchical task analysis and/or for defining the cost and value function.

According to several implementations, the method further comprises importing a value driver map by the import module and using the value driver map by the controller module for performing the hierarchical task analysis and/or for defining the cost and value function.

According to another independent aspect of the improved concept, a computer program is provided. The computer program comprises instructions that, when executed by a computer system, cause the computer system to carry out a method for cost and value engineering according to the improved concept.

According to several implementations, a computer program comprises an import module for importing a representation of the business model comprising a set of predefined business model parameters defining the business model and for importing one or more quality requirements for the business model parameters. The computer program further comprises a controller module for defining one or more tasks based on the imported business model parameters, for performing a hierarchical task analysis on each of the tasks depending on the one or more quality requirements and for defining a cost and value function for each of the tasks depending on a result of the respective hierarchical task analysis. The computer program further comprises a data storage module for storing the cost and value functions of all of the tasks to a computer-readable storage medium.

According to a further independent aspect of the improved concept, a computer readable storage medium is provided, wherein the computer-readable storage medium stores a computer program according to the improved concept.

According to a further independent aspect of the invention, a computer system is provided. The computer system comprises a processor and a computer readable storage medium storing instructions that, when executed by the processor, cause the computer system to carry out a method according to the improved concept.

Further implementations of the computer system follow readily from the various implementations and embodiments of the computer implemented method, the computer program, and the computer-readable storage medium and vice versa, respectively.

The invention will be explained in detail with respect to exemplary implementations and respective figures. In the figures, identical or functionally identical elements are denoted by identical reference signs.

In the figures:
- FIG 1: a flow chart of an exemplary implementation of a computer implemented method according to the improved concept;
- FIG 2: a block diagram of an exemplary implementation computer system or a computer program according to the improved concept;
- FIG 3: a block diagram of a further exemplary implementation of a computer system according to the improved concept; and
- FIG 4: a block diagram of a further exemplary implementation of a computer program according to the improved concept.

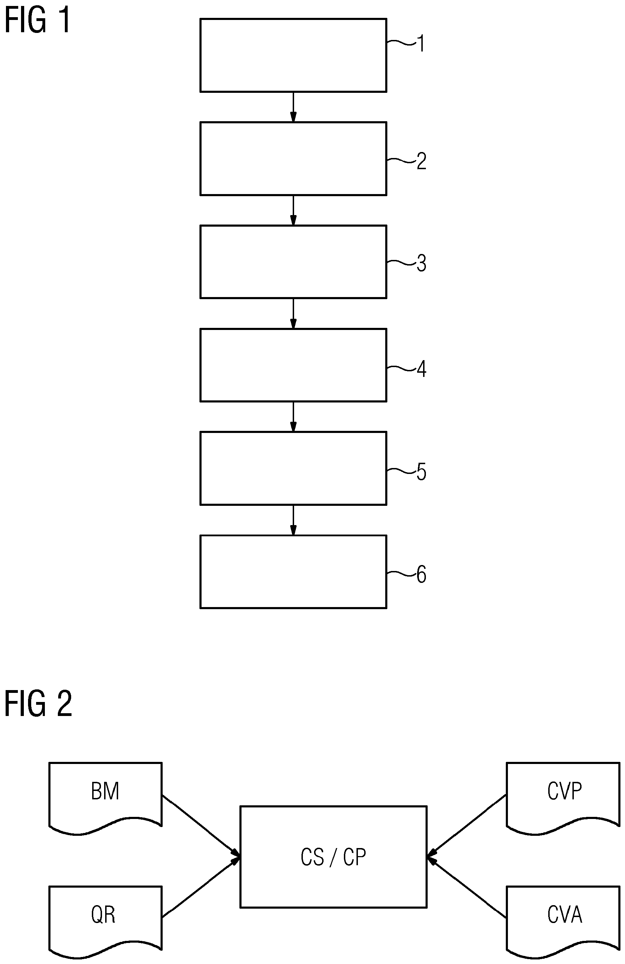

In FIG 1, a flow chart of an exemplary implementation of a computer implemented method for cost and value engineering for a software-based business model according to the improved concept is shown.

In a step 1, an import module of a computer program, for example, imports a representation of the business model, comprising a set of predefined business model parameters defining the business model. In a step 2, the import module further imports one of more quality requirements for the business model parameters.

In a step 3, a controller module, for example of a computer program, defines one or more tasks based on the imported business model parameters. In a step 4, the controller module performs a hierarchical task analysis on each of the tasks depending on the one or more quality requirements. In a step 5, the controller module defines a cost and value function for each of the tasks depending on a result of the respective hierarchical task analysis.

In a step 6, a data storage module, for example of the computer program, stores the cost and value functions of all of the tasks to a computer-readable storage medium.

FIG 2 shows a block diagram for an exemplary implementation of a computer system CS or a computer program CP according to the improved concept.

The computer system CS or the computer program CP is represented schematically by a central block CS/CP. To the left side of the central block CS/CP, inputs to the computer program or CP or computer system CS are shown. The inputs comprise a representation of a business model BM and a set of respective quality requirements QR.

On the right side of the block CS/CP, possible outputs of the computer program CP or computer system CS are shown. The outputs comprise a set cost and value functions CVF, which could be stored on a computer-readable storage medium. Optionally, the outputs comprise corresponding cost and value activities CVA.

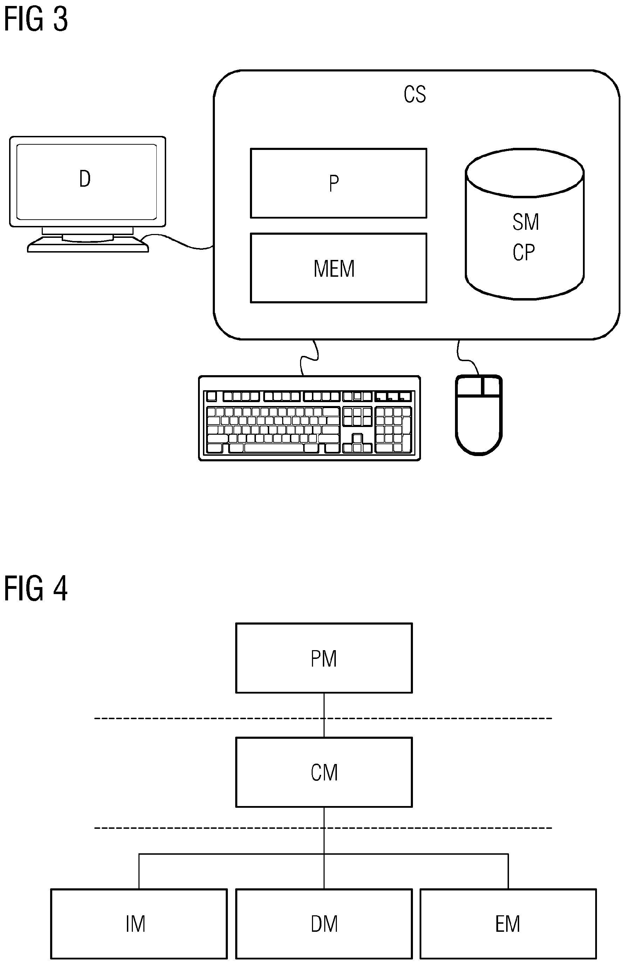

FIG 3 shows a block diagram of an exemplary implementation of a computer system CS according to the improved concept.

The computer system CS comprises a processor P and a computer-readable storage medium SM. The computer-readable storage medium SM stores the computer program CP. The computer-readable storage medium SM may for example be or comprise a hard drive or a flash drive or any other read-write storage medium.

Optionally, the computer system CS comprises a dynamic memory MEM, in particular a random access memory MEM.

The processor P is configured to read the instructions stored in the computer program CP from the storage medium SM and execute the instructions. As a consequence, the processor P and/or other components of the computer system CS are caused to carry out a method according to the improved concept.

Optionally, the computer system CS may comprise an input device, for example a keyboard or a pointing device. Furthermore, the computer system CS may optionally comprise a human machine interface, for example a display D.

FIG 4 shows a block diagram of a further exemplary implementation of a computer program according to the improved concept.

The computer program is for example structured as a threetier system for distributed collaborative workflows.

The computer program comprises an import module IM for importing a representation of the business model, wherein the representation comprises a set of predefined business model parameters defining the business model. The import module is also configured to import one or more quality requirements for the business model parameters.

The computer program further comprises a controller module CM for defining the one or more tasks based on the imported business model parameters, for performing the hierarchical task analysis for each of the tasks depending on the one or more quality requirements and for defining the cost and value function for each of the tasks depending on the result of the hierarchical task analysis.

The computer program further comprises a data storage module DM for example for storing the cost and value functions or other data to a computer-readable storage medium.

Optionally, the computer program may comprise an export module EM that is, for example, configured to export data and data structures out of the computer program.

Optionally, the computer program may comprise a presentation module PM, which may for example be configured to create different views of data and may be configured to collect user input.

According to the improved concept, a system supporting cost and value engineering for a software-based business model is provided. The system enhances an advanced and formal requirement engineering technique of a hierarchical task analysis to capture cost and value engineering data for software-based business models.

In some implementations, the system may support the composition of quality definitions together with functional decompositions of the respective tasks. Further it may enables the definition of cost and value functions for each refinement. These are data needed for cost and value engineering, which tries for example to minimize the cost and maximize the value retaining a given functionality and quality. A result may comprise a decomposition of tasks into activities of a defined functionality and quality.

According to some implementations, cost and value functions are decomposed into activities as well. These activities may have a maximum size, for example, which allows the system to produce for example an upper limit of a realization cost estimation and therefore a re-evaluation of the business model with either a correction of the value proposition or a rightsizing of task and quality offerings.

Implementations of the improved concept may provide several advantages including presentation of task decomposition with quality assurance and storage, leveraging definitions through a knowledge base for quality definition and measurements, catalogues and libraries, fast implementation of value creating and monitoring digital services, a basis for due diligent value accounting of digital services as well as backward tracking for tasks and subtasks to business ideas.

In some implementations, the improved concept may associate for each tasks stakeholders and respective value drivers. By decomposing tasks down to implementable activities, the system may ensure the composition of the value drivers to value functions and the aggregation of cost functions that become more and more precise with each decomposition step.

According to several implementations, a technical system is necessary to capture and maintain the respective data of the cost and value engineering approach in a formal way, for example to assure necessary quality to sustainably evolve the system of digital services over time.

By means of the improved concept, it may not be necessary, to rely on an assumption that value created by a software-based business model equals costs spend for the business model.

According to several implementations, decomposition of quality definitions together with functional decomposition of the respective task is included.

An additional output of several implementations may include a task hierarchy with quality definitions and value functions related to business models with their respective value drivers.

## Claims

1. Computer implemented method for cost and value engineering for a software-based business model (BM), the method comprising
- importing a representation of the business model (BM) comprising a set of predefined business model parameters defining the business model (BM) by an import module (IM);
- importing one or more quality requirements (QR) for the business model parameters by the import module (IM);
- defining one or more tasks based on the imported business model parameters by a controller module (CM);
- performing a hierarchical task analysis on each of the tasks depending on the one or more quality requirements (QR) by the controller module (CM);
- defining a cost and value function for each of the tasks depending on a result of the respective hierarchical task analysis by the controller module (CM); and
- storing cost and value activities of all of the tasks to a computer-readable storage medium (SM) by a data storage module (DM).

2. Computer implemented method according to claim 1, further comprising
- decomposing the one or more quality requirements (QR) to obtain respective quality activities by the controller module (CM);
- wherein the hierarchical task analysis is performed depending on the quality activities.

3. Computer implemented method according to one of claims 1 or 2, wherein the hierarchical task analysis further includes, for each of the tasks, a functional decomposition of the respective task.

4. Computer implemented method according to one of claims 1 to 3, further comprising decomposing the cost and value function for each of the tasks to obtain the respective cost and value activities by the controller module (CM).

5. Computer implemented method according to one of claims 1 to 4, further comprising estimating costs for the software-based business model (BM) based on the cost and value functions by the controller module (CM).

6. Computer implemented method according to one of claims 1 to 5, further comprising validating the software-based business model (BM) based on the cost and value functions by the controller module (CM).

7. Computer implemented method according to one of claims 1 to 6, further comprising,
- importing at least one definition from a knowledge database by the import module (IM); and
- using the at least one definition by the controller module (CM) for performing the hierarchical task analysis and/or for defining the cost and value function.

8. Computer implemented method according to one of claims 1 to 7, further comprising,
- importing a value driver map by the import module; and
- using the value driver map by the controller module for performing the hierarchical task analysis and/or for defining the cost and value function.

9. Computer program comprising instructions that, when executed by a computer system (CS), cause the computer system (CS) to carry out a method according to one of claims 1 to 8.

10. Computer program according to claim 9, comprising
- an import module (IM) for:
- importing a representation of the business model (BM) comprising a set of predefined business model parameters defining the business model (BM); and
- importing one or more quality requirements (QR) for the business model parameters;
- a controller module (CM) for:
- defining one or more tasks based on the imported business model parameters;
- performing a hierarchical task analysis on each of the tasks depending on the one or more quality requirements (QR); and
- defining a cost and value function for each of the tasks depending on a result of the respective hierarchical task analysis.

11. Computer readable storage medium, storing a computer program (CP) according to one of claim 9 or 10.

12. Computer system comprising
- a processor (P); and
- a computer readable storage medium (SM) storing instructions that, when executed by the processor (P), cause the computer system (CS) to carry out a method according to one of claims 1 to 8.
